# EUROPEAN PATENT APPLICATION

(11) **EP 4 467 300 A1**
(43) Date of publication of application: **27.11.2024**
(21) Application number: 24177949.5
(22) Date of filing: 24.05.2024
(51) Int. Cl.: B26D 7/26, B26F 1/40, B26F 1/44

(54) **ELECTRODE SUBSTRATE NOTCHING DEVICE AND GAP SETTING METHOD**

(30) Priority: 25.05.2023 KR 20230067825; 20.12.2023 KR 20230187736
(71) Applicant: Samsung SDI Co., Ltd., Yongin-si, Gyeonggi-do 17084 (KR)
(72) Inventor: KWON, Sungjin, 17084 Yongin-si (KR); JANG, Youngjin, 17084 Yongin-si (KR)
(74) Representative: Marks & Clerk LLP

(57) **Abstract**

An electrode substrate notching device comprises: a first base comprising a first holder; a back plate in the first holder and assembled with a fastener passing through a through-hole of the first base; a second holder in the first holder and assembled on the back plate; a punch in the second holder and assembled on the back plate; a second base; and a die on the second base positioned towards the punch. The through-hole of the first base provides space for the fastener for moving the fastener by a distance in the through-hole, where the distance is greater than an adjustment range of the punch.

## Description

### BACKGROUND

### 1. Field

Aspects of embodiments of the present disclosure relate to an electrode substrate notching device and a gap setting method thereof.

### 2. Description of the Related Art

A rechargeable battery is a battery that is designed to be repeatedly charged and discharged, unlike a primary battery. Small-capacity rechargeable batteries may be used in portable small electronic devices such as mobile phones, laptop computers, and camcorders, and large-capacity rechargeable batteries may be used as a power source for driving motors in hybrid vehicles and electric vehicles.

For example, a rechargeable battery generally includes an electrode assembly that charges and discharges, a packaging (e.g., a pouch or can) that accommodates the electrode assembly, and an electrode terminal that electrically connects the electrode assembly and draws it out to the outside of the pouch. The electrode assembly includes a winding type electrode assembly in which a negative electrode substrate and a positive electrode substrate are wound on both sides with a separator in between, or a stacking type electrode assembly in which a negative electrode substrate and a positive electrode substrate are stacked on both sides with a separator in between.

An electrode substrate process for manufacturing an electrode substrate generally includes mixing an active material slurry, coating a coating portion of the active material slurry to an electrode base, pressing the coating portion of the active material slurry, slitting for cutting the electrode base according to the heat of the coating portion, and notching the electrode base for forming the slit electrode base into the electrode plate.

The notching device of the electrode base includes a die at a lower base and a punch at an upper base. When assembling a notching device, it is desired or necessary to adjust the position of the punch to ensure quality, and the vibration of the punch should or needs to be reduced (e.g., be minimal). In addition, when expanding a gap to adjust the position of the punch, vibration of the punch may occur.

### SUMMARY

Embodiments of the present disclosure provide an electrode substrate notching device that can unitize or consolidate punches and adjust a position of the punch and a gap of the punch.

Embodiments of the present disclosure provide a gap setting method of an electrode substrate notching device that can unitize or consolidate punches to adjust the position of the punch and the gap of the punch.

An electrode substrate notching device, according to an embodiment of the present disclosure, includes: a first base comprising a first holder; a back plate in the first holder and assembled with a fastener passing through a through-hole of the first base; a second holder in the first holder and assembled on the back plate; a punch that is inserted into the second holder and assembled on the back plate; and a second base provided with a die positioned towards the punch, wherein the through-hole of the first base may provide a distance within which the fastener may be moved, and the distance may be set larger than a position adjustment range of the punch.

The through-hole of the first base may include: a first opening at a first portion of the first base, the first opening having a first area, and a second opening at a second portion of the first opening, the second opening having a second area that is larger than the first area.

The through-hole may be a slit.

The first opening may be a slit of a first length, and the second opening may be a second slit of a second length that is longer than the first length.

The fastener may include a fastening portion positioned at the first opening and fastened to the back plate, and a head portion positioned at the second opening and connected to the fastening portion.

The back plate, the second holder, and the punch may form a unit, and the back plate, the second holder, and the punch may be integrally adjusted in the first holder.

An exterior side of the back plate and the second holder may form an adjustable gap with an inner side of the first holder. The adjustment range of the punch may be defined by the gap.

The distance that the fastener can move in the through-hole of the first base may be greater than the gap that the back plate and the second holder can adjust within the first holder.

The second base may include: a die holder holding the die; a jig in the die holder; and an adjusting member configured to adjust the position of the punch inserted into the die.

The jig may be in a groove in the die holder, and may be fastened to the groove with a fastener having a fastening force in a lifting direction of the punch.

The adjusting member may be screwed to the jig for forward or backward operation on a side of the punch in a direction configured to provide repulsive force to the punch.

The adjusting member is arranged in pairs at set intervals in the jig to provide repulsive force to two positions of the punch.

In an electrode substrate notching device having a first movement range of a punch in an first base and a second movement range of the punch coupled to a die on a second base, where the second movement range is smaller than the first movement range, a gap setting method of the electrode substrate notching device includes: adjusting a gap between the punch and the die; and fixing the punch to the first base while the gap is adjusted.

The adjusting of the gap may include: inserting a back plate and a second holder into an insertion hole of a first holder installed on the first base; assembling the second holder and the back plate; and assembling the punch to the back plate with a fastener on the back plate in response to inserting the punch into the second holder.

The adjusting of the gap may further include: manually inserting the punch into the die on the second base; and adjusting a gap between the punch and the die by moving an adjusting member of a jig installed on the second base forward and pushing the punch in one direction.

The fixing of the punch to the first base may include fastening the punch to the back plate by inserting the fastener into a through-hole of the first base.

The fixing of the punch to the first base may further include separating a jig and an adjusting member from the second base.

According to an embodiment of the present disclosure, the back plate, the second holder, and the punch are formed as a unit and integrally adjusted within the first holder, and thus the position of the punch and the gap between the punches can be easily adjusted. Therefore, a 1:1 manual custom assembly of the punch and the die is possible.

According to an embodiment of the present disclosure, the first holder supports the back plate, the second holder, and the punch, and thus it can withstand the side load generated by the repulsive force of the electrode substrate (e.g., a workpiece) when notching the electrode substrate.

Therefore, the phenomenon or problem of the punch being gradually pushed to the side or tilted during notching of the electrode substrate can be prevented. In other words, in one or more embodiments, the gap between the die and the punch is maintained constant, preventing burrs from occurring.

At least some of the above and other features of the invention are set out in the claims.

### BRIEF DESCRIPTION OF THE DRAWINGS

FIG. 1 is a cross-sectional view of an electrode substrate notching device according to an embodiment of the present disclosure.
FIG. 2 is an exploded perspective view of a punch unit installed in FIG. 1 according to an embodiment of the present disclosure.
FIG. 3 is a bottom view of the punch unit of FIG. 2 with the punch inserted into a sub-holder according to an embodiment of the present disclosure.
FIG. 4 is a bottom view of the punch unit of FIG. 3 with the sub-holder inserted into a main holder according to an embodiment of the present disclosure.
FIG. 5 is a top plan view of a bolt and a slot hole formed on an upper base of FIG. 1 of the electrode substrate notching device of according to an embodiment of the present disclosure.
FIG. 6 is an exploded perspective view of a die holder, a jig, and an adjusting member of the lower base according to an embodiment of the present disclosure.
FIG. 7 is a cross-sectional view of the electrode substrate notching device of FIG. 1 depicting the position of a punch with respect to a die according to an embodiment of the present disclosure.
FIG. 8 is a flow diagram of the gap setting method of the electrode substrate notching device according to an embodiment of the present disclosure.
FIG. 9 is a cross-sectional view of the electrode substrate notching device of FIG. 1, depicting an electrode substrate set on a die of a lower base for notching the electrode substrate using a gap setting method according to an embodiment of the present disclosure.
FIG. 10 is a cross-sectional view of the electrode substrate notching device of FIG. 1, depicting notching of the electrode substrate by lowering a punch of an upper base that is placed in the state described with respect to FIG. 9.

### DETAILED DESCRIPTION

Hereinafter, the present disclosure will be described more fully hereinafter with reference to the accompanying drawings, in which embodiments of the present disclosure are shown. As those skilled in the art would realize, the described embodiments may be modified in various different ways, all without departing from the scope of the present disclosure. Thus, the drawings and description are to be regarded as illustrative in nature and not restrictive.

It will be understood that when an element or layer is referred to as being "on," "connected to," or "coupled to" another element or layer, it may be directly on, connected, or coupled to the other element or layer or one or more intervening elements or layers may also be present. When an element or layer is referred to as being "directly on," "directly connected to," or "directly coupled to" another element or layer, there are no intervening elements or layers present. For example, when a first element is described as being "coupled" or "connected" to a second element, the first element may be directly coupled or connected to the second element or the first element may be indirectly coupled or connected to the second element via one or more intervening elements.

In the figures, dimensions of the various elements, layers, etc. may be exaggerated for clarity of illustration. The same reference numerals designate the same elements. As used herein, the term "and/or" includes any and all combinations of one or more of the associated listed items. Further, the use of "may" when describing embodiments of the present disclosure relates to "one or more embodiments of the present disclosure." Expressions, such as "at least one of" and "any one of," when preceding a list of elements, modify the entire list of elements and do not modify the individual elements of the list. For example, the expression "at least one of a, b, or c" indicates only a, only b, only c, both a and b, both a and c, both b and c, all of a, b, and c, or variations thereof. As used herein, the terms "use," "using," and "used" may be considered synonymous with the terms "utilize," "utilizing," and "utilized," respectively. As used herein, the terms "substantially," "about," and similar terms are used as terms of approximation and not as terms of degree, and are intended to account for the inherent variations in measured or calculated values that would be recognized by those of ordinary skill in the art.

It will be understood that, although the terms first, second, third, etc. may be used herein to describe various elements, components, regions, layers, and/or sections, these elements, components, regions, layers, and/or sections should not be limited by these terms. These terms are used to distinguish one element, component, region, layer, or section from another element, component, region, layer, or section. Thus, a first element, component, region, layer, or section discussed below could be termed a second element, component, region, layer, or section without departing from the teachings of example embodiments.

Spatially relative terms, such as "beneath," "below," "lower," "above," "upper," and the like, may be used herein for ease of description to describe one element or feature's relationship to another element(s) or feature(s) as illustrated in the figures. It will be understood that the spatially relative terms are intended to encompass different orientations of the device in use or operation in addition to the orientation depicted in the figures. For example, if the device in the figures is turned over, elements described as "below" or "beneath" other elements or features would then be oriented "above" or "over" the other elements or features. Thus, the term "below" may encompass both an orientation of above and below. The device may be otherwise oriented (rotated 90 degrees or at other orientations), and the spatially relative descriptors used herein should be interpreted accordingly.

The terminology used herein is for the purpose of describing embodiments of the present disclosure and is not intended to be limiting of the present disclosure. As used herein, the singular forms "a" and "an" are intended to include the plural forms as well, unless the context clearly indicates otherwise. It will be further understood that the terms "includes," "including," "comprises," and/or "comprising," when used in this specification, specify the presence of stated features, integers, steps, operations, elements, and/or components but do not preclude the presence or addition of one or more other features, integers, steps, operations, elements, components, and/or groups thereof.

Also, any numerical range disclosed and/or recited herein is intended to include all sub-ranges of the same numerical precision subsumed within the recited range. For example, a range of "1.0 to 10.0" is intended to include all subranges between (and including) the recited minimum value of 1.0 and the recited maximum value of 10.0, that is, having a minimum value equal to or greater than 1.0 and a maximum value equal to or less than 10.0, such as, for example, 2.4 to 7.6. Any maximum numerical limitation recited herein is intended to include all lower numerical limitations subsumed therein, and any minimum numerical limitation recited in this specification is intended to include all higher numerical limitations subsumed therein. Accordingly, Applicant reserves the right to amend this specification, including the claims, to expressly recite any sub-range subsumed within the ranges expressly recited herein.

When an electrode substrate notching device is used for a long period of time, a punch and a die may become worn, or a gap between the punch and the die may widen, which may reduce the quality of the product. A lifespan management of the substrate notching device is therefore desirable or necessary. When the lifespan has expired, the punch and the die are separated and taken through a grinding process in the electrode substrate notching device, and then reassembled and reused. In general, when the grinding process of the punch and the die is about 50 to 100 cycles, the entire notching device is replaced.

In addition, the number of punches at which burrs occur due to wear of the punch and die is generally in a range of 1 million to 1.5 million strokes. Burrs may occur when it is generally not feasible or impossible to maintain the gap due to a side load caused by a repulsive force of the workpiece (e.g., the electrode substrate). In this case, it may be desirable or necessary to adjust the notching device or regrind the punch and the die.

For example, to maintain the gap, a 1:1 assemble of the punch and the die with a zero gap is desired (e.g., required). However, in the case of an insertion type where a punch is inserted into a holder, a 1:1 alignment adjustment is generally not possible due to the structure, and in the case of a plate punch bolting structure where the punch is assembled on the plate, the side load causes the punch to retract. An anti-slip block is additionally provided to prevent the retraction of the punch, but as the number of strokes increases, it gradually pushes the punch and causes the punch to move around.

In one or more embodiments of the present disclosure, a holder structure and a plate punch bolting structure are combined, allowing the position of the punch to be adjusted and preventing or lessening the punch from being pushed around. A notching device of a current art plate punch bolting structure may produce burrs after about 10,000 strokes and may produce about 200,000 strokes when the anti-slip block is added. One or more embodiments of the present disclosure improve the number of strokes to an average of about 1 million strokes.

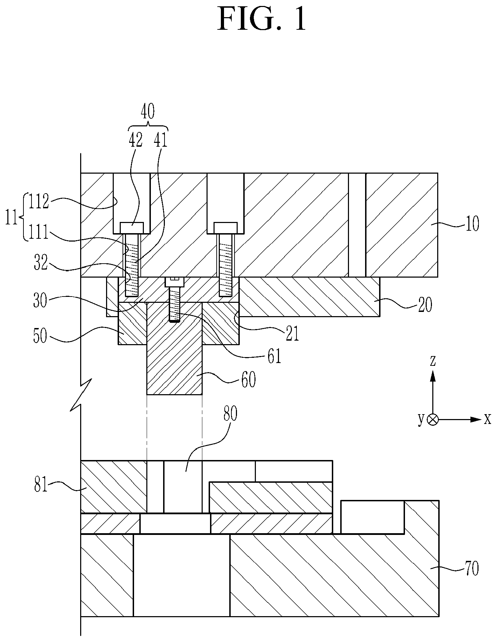

FIG. 1 is a cross-sectional view of an electrode substrate notching device according to an embodiment of the present disclosure. The electrode substrate notching device according to the embodiment of FIG. 1 includes a main holder (also referred to as a first holder) 20 of an upper base (also referred to as a first base) 10, a back plate 30, a fastening member (fastener) 40, a sub-holder (also referred to as a second holder) 50, a punch 60, and a die 80 of a lower base (also referred to as a second base) 70.

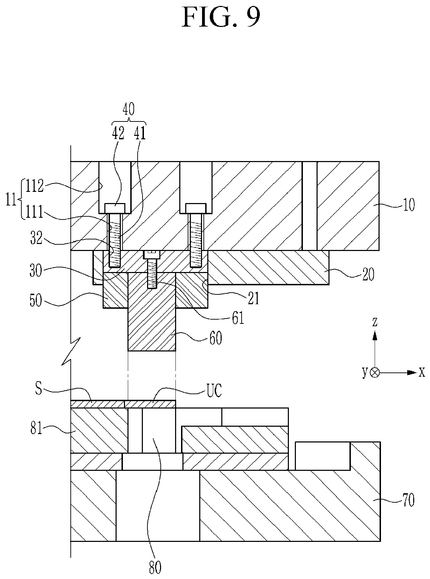

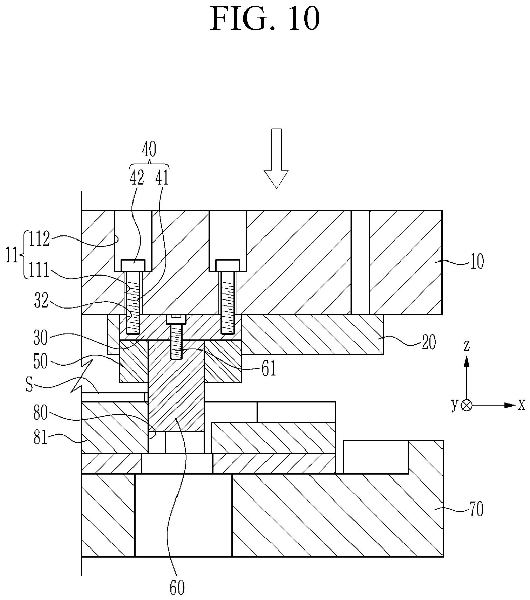

The electrode substrate notching device supplies (e.g., continuously) an electrode substrate S (refer to FIG. 9 and FIG. 10) in a reel form between the lower base 70 and the upper base 10, to form a plate with tabs, by notching an uncoated region UC of the electrode substrate S. In some embodiments, the notching produces positive and negative electrode plates from the electrode substrate S.

The upper base 10 is configured to ascend and descend on the lower base 70 based on an elevation configuration that may be formed in various ways as will be appreciated by a person of skill in the art, detailed descriptions of which are omitted for sake of conciseness. The main holder 20 is provided on the bottom of the upper base 10 toward the lower base 70. In some embodiments, the main holder 20 enables installation of the punch 60, and prevents the punch 60 from being pushed to the side.

The position of the punch 60 is configured to be adjustable within the main holder of the electrode substrate notching device (e.g. the punch or an assembly of which the punch is a part is moveable within an opening provided in the main holder), within an adjustment range for the punch. For example, the punch may be adjustable within the x-y plane of the electrode substrate notching device. In embodiments herein, the main holder 20 includes an insertion hole 21 to adjust a position of the punch 60. The insertion hole 21 determines an approximate position where the punch 60 is installed in the upper base 10. The back plate 30 is inserted into the insertion hole 21 of the main holder 20 and is assembled with the fastening member 40 that penetrates a through-hole 11 on the upper base 10. The fastening member 40 may include a bolt, screw, or any other fastener known to those of ordinary skill in the art.

The through-hole 11 of the upper base 10 provides a distance for (or space or room for) the fastening member 40 for moving the fastening member within the upper base. The fastener may be moved within the through-hole 11 in the x-y plane (e.g. along the x-direction, along the y-direction or along both directions simultaneously) by a distance. The distance may be set larger (or greater) than a range (e.g., a required range) in which the position of the punch 60 may be adjusted. In some embodiments, the size of the through-hole 11 is set to allow the fastening member 40 to move in the through-hole by a distance that is greater than a second distance (e.g., an adjustment range) by which the punch 60 moves for adjusting the position of the punch. Therefore, according to some embodiments, when adjusting the position of the punch 60, the fastening member 40 does not resist (or does not encounter substantial resistance) within the through-hole 11 such that the position can be adjusted (e.g., fully adjusted).

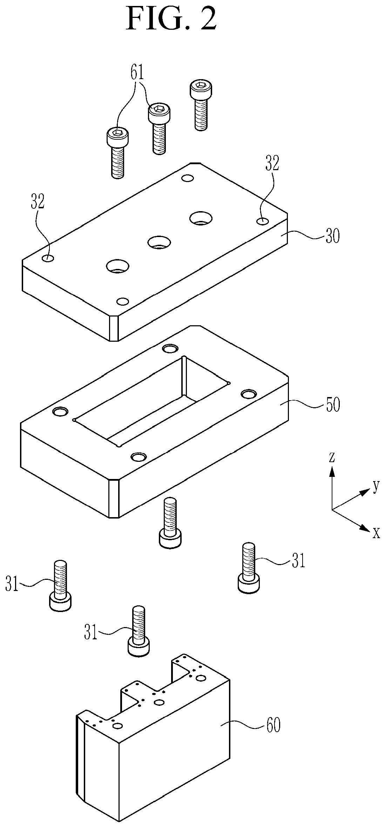

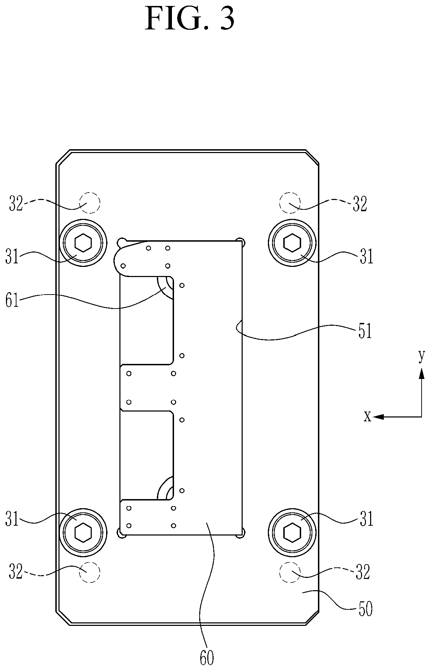

FIG. 2 is an exploded perspective view of a punch unit installed in FIG. 1, and FIG. 3 is a bottom view of the punch unit of FIG. 2 with the punch 60 inserted into the sub-holder 50, according to an embodiment of the present disclosure. Referring to FIG. 1 to FIG. 3, the sub-holder 50 is inserted into the insertion hole 21 of the main holder 20 and assembled on the back plate 30. In some embodiments, the sub-holder 50 is fastened to the back plate 30 with a fastening member 31. The fastening member 31 may include a bolt, screw, or any other fastening device known to those of ordinary skill in the art.

The punch 60 is inserted into the sub-holder 50 and thus assembled to the back plate 30. That is, in some embodiments, the punch 60 is inserted into a through-hole 51 (see, FIG. 3) of the sub-holder 50 and fastened to the back plate 30 with a fastening member 61. The fastening member 31 may include a bolt, screw, or any other fastening device known to those of ordinary skill in the art.

In some embodiments, the back plate 30, the sub-holder 50, and the punch 60 form a punch unit that operates integrally (or as a whole or single unit) with respect to the die 80, via the fastening members 31 and 61. Therefore, in some embodiments, the back plate 30, the sub-holder 50, and the punch 60 may be positioned within the insertion hole 21 of the main holder 20. For example, the assembly of the back plate 30, the sub-holder 50, and the punch 60 are moveable within the insertion hole to provide the adjustment range for the punch 60.

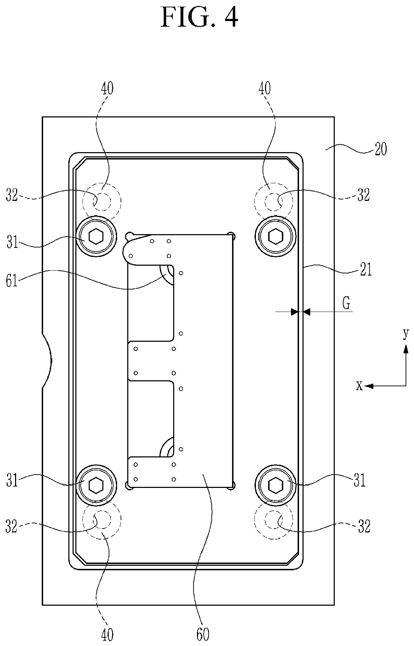

FIG. 4 is a bottom view of the punch unit of FIG. 3 with the sub-holder 50 inserted into the main holder according to an embodiment of the present disclosure. Referring to FIG. 1 to FIG. 4, an exterior side of the back plate 30 and the sub-holder 50 forms an adjustable gap G with an inner side of the insertion hole 21 of the main holder 20. In some embodiments, an exterior side of the combination of the back plate 30 and the sub-holder 50 forms the adjustable gap G. As an example, the gap G is set to the x-axis direction.

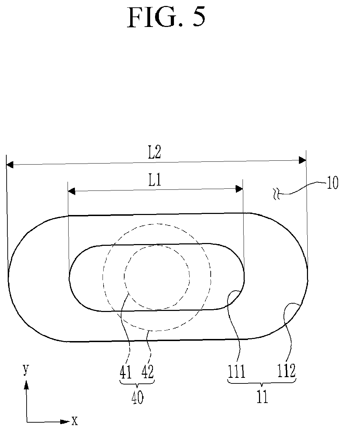

FIG. 5 is a top plan view of a bolt and a slot hole formed on the upper base of the electrode substrate notching device of FIG. 1 according to an embodiment of the present disclosure. Referring to FIG. 1 and FIG. 5, the through-hole 11 of the upper base 10 includes a first opening 111 formed at the bottom of the upper base 10 and a second opening 112 formed at the top of the upper base 10. The first opening 111 has a first area, and the second opening 112 has a second area that is larger than the first area.

As an example, the through-hole 11 is formed as a slit, although embodiments are not limited thereto, and the through-hole may be formed as any other cut, incision, or opening known to those of ordinary skill in the art. Using a slit as an example of the through-hole 11, the first opening 111 is formed as a slit of a first length L1, and the second opening 112 is formed as a slit of a second length L2, which is longer than the first length L1. As an example, the through-hole 11 is set in the x-axis direction corresponding to the gap G. Therefore, according to some embodiments, the position of the punch 60 may be adjusted in the x-axis direction. In some embodiments, the first length L1 and the second L2 define a first movement range of the punch 60 from the upper base 10.

The fastening member 40 positioned in the through-hole 11 includes a fastening portion 41 and a head portion 42 that are connected to each other. The fastening portion 41 is placed in the first opening 111 and fastened to a fastening hole 32 (refer to FIG. 1 and FIG. 2). The fastening portion 41 is formed as a male thread, and the fastening hole 32 of the back plate 30 forms a female thread such that the fastening portion 41 can be fastened to the back plate 30. The head portion 42 is connected to the fastening portion 41 and placed in the second opening 112.

The first opening 111 and the second opening 112 allow the fastening portion 41 and the head portion 42 to be moved in the x-axis direction to adjust the position of the punch 60 in the x-axis direction. In addition, although not separately shown in the present embodiment, the first opening 111 and the second opening 112 are not limited to the x-axis direction and space (e.g., sufficient space) may be provided such that the fastening portion 41 and the head portion 42 can move in the x- and y-axis directions. According to this embodiment, the amount of space that is provided allows the head portion 41 to be caught in the second opening, and the gap is set in the x and y-axis directions.

In some embodiments, referring to FIG. 4 and FIG. 5, the distance that the fastening member 40 can move within the through-hole 11 of the upper base 10 is larger or greater than the gap G that the back plate 30 and the sub-holder 50 can adjust within the insertion hole 21 of the main holder 20.

In some embodiments, the distance that the fastening member 40 can move is set larger or greater than the range (e.g., the required range) to adjust the position of the punch 60. Thus, according to some embodiments, when adjusting the position of the punch 60 with respect to the die 80, the fastening member 40 does not resist (or does not encounter substantial resistance) within the through-hole 11 such that the position of the punch 60 can be sufficiently adjusted. In some embodiments, the amount of space provided by the first opening 111 and the second opening 112 is such that movement of the fastening member 40 inside the through-hole 11 is not impaired or substantially restricted due to the repositioning of the punch 60.

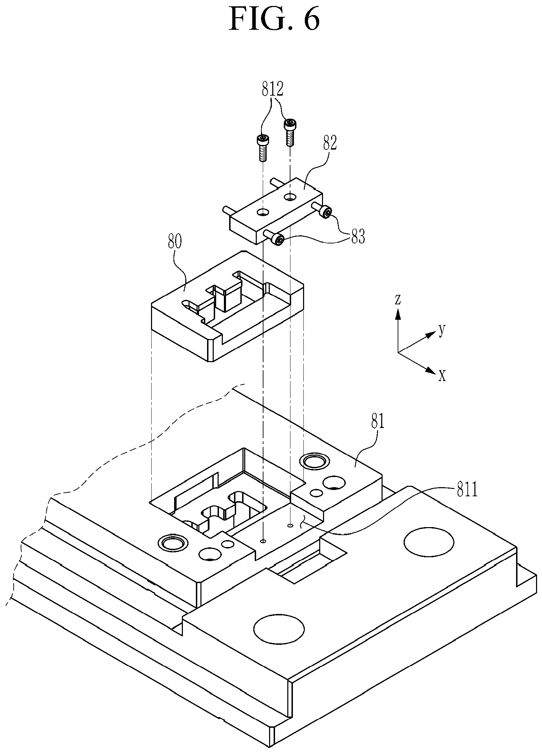

FIG. 6 is an exploded perspective view of a die holder, a jig, and an adjusting member of the lower base according to an embodiment of the present disclosure. Referring to FIG. 1 to FIG. 6, the die 80 is installed on the lower base 70 through a die holder 81. The lower base 70 includes the die holder 81 that holds the die 80, a jig 82 installed in the die holder 81, and an adjusting member 83 that adjusts the position of the punch 60 inserted into the die 80. The adjusting member 83 may include a bolt, screw, and/or the like. A position adjustment range of the punch 60 in the die 80 sets a second movement range of the punch 60 when connected to the die 80. The second movement range is set to be smaller than the first movement range.

The jig 82 is inserted into an install groove 811 provided in the die holder 81, and is fastened to the install groove 811 with a fastening member 812 having a fastening force in the lifting direction (z-axis direction) of the punch 60.

The adjusting member 83 is screwed to the jig 82 for forward or backward operation in a direction (e.g., the x-axis direction) that provides repulsive force to the punch 60 from the side of the punch 60. In some embodiments, the adjusting member 83 is arranged in pairs at certain or set (e.g., predetermined) intervals in the y-axis direction in the jig 82 to provide repulsive force to two positions of the punch 60.

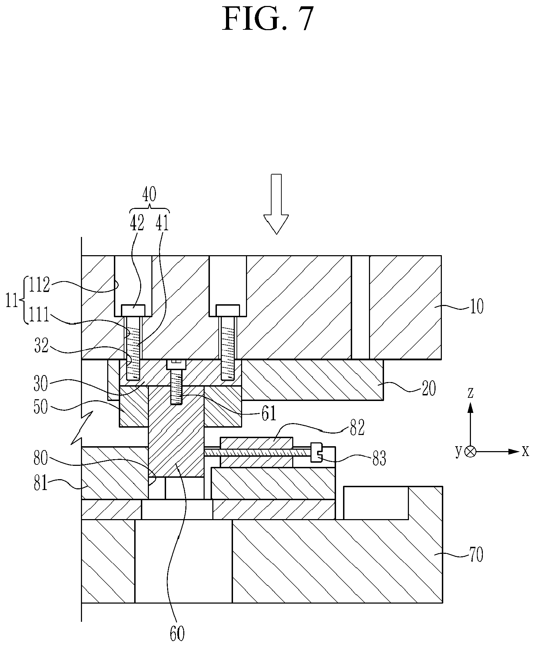

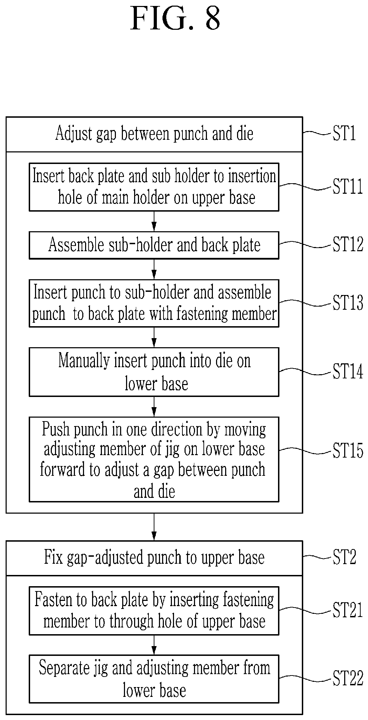

FIG. 7 is a cross-sectional view of the electrode substrate notching device of FIG. 1 depicting the position of the punch 60 with respect to the die 80 according to an embodiment of the present disclosure. In the embodiment of FIG. 7, the gap between the die and the punch is adjusted by pushing the punch 60 that is inserted in the die 80, using the adjusting member 83 installed with the jig 82 on the die holder 81 of the lower base 70, according to a gap setting method of the electrode substrate notching device. FIG. 8 is a flow diagram of the gap setting method of the electrode substrate notching device according to an embodiment of the present disclosure.

Referring to FIG. 1, FIG. 7, and FIG. 8, the gap setting method of the notching device includes a first act ST1 and a second act ST2. In the first act ST1, a gap between the punch 60 and the die 80 is adjusted. In the second act ST2, the punch 60 is fixed to the upper base 10 while the gap is adjusted.

The electrode substrate notching device has a first movement range of the punch 60 in the upper base 10 and a second movement range of the punch 60 coupled to the die 80 fixed to the lower base 70. In some embodiments, the second movement range is smaller than the first movement range.

In some embodiments, act ST1 includes acts ST11, ST12, and ST13. In act ST11, the back plate 30 and the sub-holder 50 are inserted into the insertion hole 21 of the main holder 20. In act ST12, the sub-holder 50 and the back plate 30 are assembled with the fastening member 31. In act ST13, the punch 60 is inserted into the sub-holder 50 and the punch 60 and the back plate 30 are assembled with the fastening member 61 (e.g. the punch 60 is attached to the back plate 30 with the fastening member 61).

In some embodiments, act ST1 further includes act ST14 and act ST15. In act ST14, the punch 60 is manually inserted into the die 80. In act ST15, the adjusting member 83 of the jig 82 is moved forward to push the punch 60 in the x-axis direction to adjust the gap between the punch 60 and the die 80. In some embodiments, the gap is adjusted close to zero. In some embodiments, the punch 60 is not pushed or tilted by the sub-holder 50 and the main holder 20.

In some embodiments, when the back plate 30 of the punch unit in which the punch 60 is assembled is moved within the insertion hole 21 of the main holder 20 and the fastening member 40 is moved in the x-axis direction within the through-hole 11, the gap can be adjusted.

In some embodiments, act ST2 includes act ST21 and act ST22. In act ST21, the gap between the die 80 and the punch 60 is set and the fastening member 40 is fastened to the back plate 30 to complete the entire assembly. In act ST21, the fastening member 40 is inserted into the through-hole 11 of the upper base 10 and fastened to the back plate 30. In some embodiments, the gap between the punch 60 and the die 80 is adjusted to zero, and the punch 60 is not pushed or tilted by the sub-holder 50 and the main holder 20. In act ST22, when the gap adjustment and fastening are complete, the jig 82 and the adjusting member 83 are separated from the lower base 70 to prevent interference during notching.

FIG. 9 is a cross-sectional view of the electrode substrate notching device of FIG. 1, depicting the electrode substrate S set on the die 80 of the lower base 70 for notching the electrode substrate S using the gap setting method according to an embodiment of the present disclosure. Referring to FIG. 7 and FIG. 9, when assembly of the punch 60 is completed and placed in the state described with respect to FIG. 7, the jig 82 is removed, the upper base 10 is lifted, and the electrode substrate S is provided or set onto the die 80 and the lower base 70.

FIG. 10 is a cross-sectional view of the electrode substrate notching device of FIG. 1, depicting notching of the electrode substrate S by lowering the punch 60 of the upper base that is placed in the state described with respect to FIG. 9. Referring to FIG. 9 and FIG. 10, when the supply of the electrode substrate S is completed and placed in the state described with respect to FIG. 9, the upper base 10 is lowered and the electrode substrate S is punched between the punch 60 and the die 80.

An electrode plate is produced by punching out the uncoated region UC of the electrode substrate S, which is supplied (e.g., continuously), while the punch 60 is lifted and lowered (e.g., iteratively) as illustrated in FIG. 9 and FIG. 10.

In an embodiment, the back plate 30, the sub-holder 50, and the punch 60 are formed as a unit (e.g., a punch unit), and integrally adjusted (e.g., as a single unit) within the main holder 20, and thus the position of the punch 60 and the gap of the punch 60 can be easily adjusted. According to an embodiment, a 1:1 (one-to-one) manual custom assembly of the punch 60 and the die 80 is enabled.

According to an embodiment, the back plate 30, the sub-holder 50, and the punch 60 are supported by the main holder 20, and thus the side load generated by the repulsive force of the electrode substrate S (e.g., the workpiece), can be held out (or withstood) when notching the electrode substrate S. In some embodiments, when notching the electrode substrate S, the phenomenon of the punch 60 being gradually pushed to the side or tilted is prevented or substantially reduced. In these embodiments, the gap between the die 80 and the punch 60 is maintained constant to prevent or substantially reduce the occurrence of burrs.

Although the preferred embodiment of the present disclosure has been described above, the present disclosure is not limited to this and can be modified and implemented in various ways within the scope of the claims, description of the invention, and accompanying drawing, and this is natural that it falls into the range of the present disclosure.

### Description of symbols

| | | | |
|---|---|---|---|
| 10: | upper base | 11: | through-hole |
| 20: | main holder | 21: | insertion hole |
| 30: | back plate | 31, 40: | fastening member |
| 32: | fastening hole | 41: | fastening portion |
| 42: | head portion | 50: | sub-holder |
| 51: | through-hole | 60: | punch |
| 61: | fastening member | 70: | lower base |
| 80: | die | 81: | die holder |
| 82: | jig | 83: | adjusting member |
| 111: | first opening | 112: | second opening |
| 811: | install groove | 812: | fastening member |
| G: | gap | L1: | first length |
| L2: | second length | S: | electrode substrate |
| UC: | uncoated region | | |

Further Embodiments are set out in the following clauses:
Clause 1. An electrode substrate notching device comprising:
   a first base comprising a first holder;
   a back plate in the first holder and assembled with a fastener passing through a through-hole of the first base;
   a second holder in the first holder and assembled on the back plate;
   a punch in the second holder and assembled on the back plate;
   a second base; and
   a die on the second base positioned towards the punch,
   wherein the through-hole of the first base provides space for the fastener for moving the fastener by a distance in the through-hole, and
   wherein the distance is greater than an adjustment range of the punch.
Clause 2. The electrode substrate notching device of clause 1, wherein the through-hole of the first base comprises:
   a first opening at a first portion of the first base, the first opening having a first area; and
   a second opening at a second portion of the first opening, the second opening having a second area that is larger than the first area.
Clause 3. The electrode substrate notching device of clause 2, wherein the through-hole is a slit.
Clause 4. The electrode substrate notching device of clause 3, wherein the first opening is a first slit of a first length, and the second opening is a second slit of a second length that is longer than the first length.
Clause 5. The electrode substrate notching device of any one of clauses 2 - 4, wherein the fastener comprises:
   a fastening portion positioned at the first opening and fastened to the back plate; and
   a head portion positioned at the second opening and connected to the fastening portion.
Clause 6. The electrode substrate notching device of any preceding clause, wherein the back plate, the second holder, and the punch form a unit, and the back plate, the second holder, and the punch are integrally adjusted in the first holder.
Clause 7. The electrode substrate notching device of clause 6, wherein an exterior side of the back plate and the second holder forms a gap with an inner side of the first holder, and wherein the adjustment range of the punch is defined by the gap.
Clause 8. The electrode substrate notching device of clause 7, wherein the distance is greater than the gap.
Clause 9. The electrode substrate notching device of any preceding clause, wherein the second base comprises:
   a die holder holding the die;
   a jig in the die holder; and
   an adjusting member configured to adjust a position of the punch inserted into the die.
Clause 10. The electrode substrate notching device of clause 9, wherein the jig is in a groove in the die holder, and is fastened to the groove with a fastener having a fastening force in a lifting direction of the punch.
Clause 11. The electrode substrate notching device of clause 10, wherein the adjusting member is screwed to the jig for forward or backward operation on a side of the punch in a direction configured to provide repulsive force to the punch.
Clause 12. The electrode substrate notching device of clause 11, wherein the adjusting member is arranged in pairs at set intervals in the jig to provide repulsive force to two positions of the punch.
Clause 13. A gap setting method of an electrode substrate notching device having a first movement range of a punch in a first base and a second movement range of the punch coupled to a die on a second base, wherein the second movement range is smaller than the first movement range, the method comprising:
   adjusting a gap between the punch and the die; and
   fixing the punch to the first base while the gap is adjusted.
Clause 14. The gap setting method of the electrode substrate notching device of clause 13, wherein the adjusting of the gap further comprises:
   inserting a back plate and a second holder into an insertion hole of a first holder installed on the first base;
   assembling the second holder and the back plate; and
   assembling the punch to the back plate with a fastener in response to inserting the punch into the second holder.
Clause 15. The gap setting method of the electrode substrate notching device of clause 14, wherein the adjusting of the gap further comprises:
   manually inserting the punch into the die on the second base; and
   adjusting a gap between the punch and the die by moving an adjusting member of a jig installed on the second base forward and pushing the punch in one direction.
Clause 16. The gap setting method of the electrode substrate notching device of clause 13 or clause 14, wherein the fixing of the punch to the first base comprises fastening the punch to the back plate by inserting the fastener into a through-hole of the first base.
Clause 17. The gap setting method of the electrode substrate notching device of clause 16, wherein the fixing of the punch to the first base comprises separating a jig and an adjusting member from the second base.

## Claims

1. An electrode substrate notching device comprising:
a first base comprising a first holder;
a back plate in the first holder and assembled with a fastener passing through a through-hole of the first base;
a second holder in the first holder and assembled on the back plate;
a punch in the second holder and assembled on the back plate;
a second base; and
a die on the second base positioned towards the punch,
wherein the through-hole of the first base provides space for moving the fastener by a distance in the through-hole, and
wherein the distance is greater than an adjustment range of the punch.

2. The electrode substrate notching device of claim 1, wherein the through-hole of the first base comprises:
a first opening at a first portion of the first base, the first opening having a first area; and
a second opening at a second portion of the first opening, the second opening having a second area that is larger than the first area.

3. The electrode substrate notching device of claim 2, wherein the through-hole is a slit.

4. The electrode substrate notching device of claim 3, wherein the first opening is a first slit of a first length, and the second opening is a second slit of a second length that is longer than the first length.

5. The electrode substrate notching device of any one of claims 2-4, wherein the fastener comprises:
a fastening portion configured to be positioned at the first opening and to be fastened to the back plate; and
a head portion configured to be positioned at the second opening and to be connected to the fastening portion.

6. The electrode substrate notching device of any preceding claim, wherein the back plate, the second holder, and the punch form a unit, and the back plate, the second holder, and the punch are integrally adjusted in the first holder.

7. The electrode substrate notching device of claim 6, wherein an exterior side of the back plate and the second holder are configured to form a gap with an inner side of the first holder, and wherein the adjustment range of the punch is defined by the gap
wherein, optionally, the distance is greater than the gap.

8. The electrode substrate notching device of any preceding claim, wherein the second base comprises:
a die holder holding the die;
a jig in the die holder; and
an adjusting member configured to adjust a position of the punch inserted into the die.

9. The electrode substrate notching device of claim 8, wherein the jig is configured to be inserted in a groove in the die holder, and is configured to be fastened to the groove with a fastener having a fastening force in a lifting direction of the punch.

10. The electrode substrate notching device of claim 9, wherein the adjusting member is configured to be screwed to the jig for forward or backward operation on a side of the punch in a direction configured to provide repulsive force to the punch.

11. The electrode substrate notching device of claim 10, wherein the adjusting member is configured to be arranged in pairs at set intervals in the jig to provide repulsive force to two positions of the punch.

12. A gap setting method of an electrode substrate notching device having a first movement range of a punch in a first base and a second movement range of the punch coupled to a die on a second base, wherein the second movement range is smaller than the first movement range, the method comprising:
adjusting a gap between the punch and the die; and
fixing the punch to the first base while the gap is adjusted.

13. The gap setting method of the electrode substrate notching device of claim 12, wherein the adjusting of the gap further comprises:
inserting a back plate and a second holder into an insertion hole of a first holder installed on the first base;
assembling the second holder and the back plate; and
assembling the punch and back plate with a fastener after inserting the punch into the second holder.

14. The gap setting method of the electrode substrate notching device of claim 13, wherein the adjusting of the gap further comprises:
manually inserting the punch into the die on the second base; and
adjusting a gap between the punch and the die by moving an adjusting member of a jig installed on the second base forward and pushing the punch in one direction.

15. The gap setting method of the electrode substrate notching device of claim 13 or claim 14, wherein the fixing of the punch to the first base comprises fastening the punch to the back plate by inserting the fastener into a through-hole of the first base, wherein, optionally, the fixing of the punch to the first base comprises separating a jig and an adjusting member from the second base.
